# EUROPEAN PATENT APPLICATION

(11) **EP 0 864 354 A1**
(43) Date of publication of application: **16.09.1998**
(21) Application number: 97310700.6
(22) Date of filing: 31.12.1997
(51) Int. Cl.: B01D 53/86, B01J 27/199

(54) **Sulphur resistant lean-NOx catalyst for treating diesel emissions**

(30) Priority: 10.03.1997 US 814524
(71) Applicant: Ford Global Technologies, Inc., Dearborn, Michigan 48126 (US)
(72) Inventor: Hoost, Tjenga E., Redford, Michigan 48239 (US); Kudla, Robert J., Warren, Michigan 48091 (US); Chattha, Mohinder S., Northville, Michigan 48167 (US)
(74) Representative: Messulam, Alec Moses

(57) **Abstract**

A catalyst for reducing the concentration of Nox in diesel engine exhaust gases. The catalyst comprises a porous alumina support with materials loaded on the support consisting of (i) 5-40 weight percent 12-tungstophosphoric acid and (ii) at least 0.25 weight per cent of a precious metal selected from the group consisting of platinum, palladium, rhodium, or mixtures thereof.

## Description

This invention relates to a sulphur-resistant lean-NOx catalyst useful in the exhaust gas system of a diesel internal combustion engine to convert exhaust gases.

Reference is made to concurrently filed related patent application U.S. Serial No. 08/662,178 based on disclosure No. 96-0746 and entitled "Sulphur-Resistant NOₓ Traps Containing Tungstophosphoric Acid and Precious Metal".

Catalysts are employed in the exhaust gas systems of automotive vehicles to convert carbon monoxide, hydrocarbons, and nitrogen oxides (NOx) produced during engine operation into more desirable gases. When the engine is operated in a stoichiometric or slightly rich air/fuel ratio, i.e., between about 14.7 and 14.4 , catalysts containing palladium, platinum and rhodium, or palladium and rhodium are able to efficiently convert all three gases simultaneously. Hence, such catalysts are often called "three-way" catalysts.

Diesel engines have received widespread use because of the fuel economy attainable by such engines. Such engines operate under "lean-burn" (excess-oxygen) conditions where the A/F ratio is generally between 19 and 40. While conventional three-way catalysts are able to convert carbon monoxide and hydrocarbons during lean-burn operation, they are less than efficient in the reduction of NOx during lean-burn diesel operation. Thus, using such three-way catalysts for diesel engines has generally resulted in only inadequate NOx reduction with a concurrent increase in particulate emissions.

Numerous lean-NOx catalysts have been developed specifically to operate in lean-burn situations. One of the continuing deficiencies with many lean-NOx catalysts such as platinum carried on alumina, however, is that they are susceptible to deactivation by sulphur. That is, the sulphur present in the fuel reacts chemically with the catalyst so that it is less effective for converting exhaust gases. Since diesel fuels generally contain an even higher level of sulphur than gasoline fuels, developing a more sulphur resistant lean-NOx catalyst for diesel engines is highly desirable.

In patent application Serial No. 08/662,178 filed June 12, 1996, having common inventorship and being commonly assigned with this invention, a catalyst of tungsten oxide carried on platinum for lean-burn emission treatment is disclosed. That catalyst provides higher NOx conversion and lower light-off temperatures under lean-burn exhaust conditions than an unmodified platinum on alumina catalyst, but the potential for poisoning by sulphur still remains an issue.

Developing a lean-NOx catalyst with reduced susceptibility to poisoning by sulphur is critical if the catalyst is to be particularly used for converting diesel exhaust gases. And for efficient catalytic conversion in a diesel system, the lean-NOx catalyst is required to carry out the conversion at the relatively lower temperatures of diesel operation, i.e., between about 200°C and 650°C. We have found that a catalyst containing precious metal like platinum in combination with 12-tungstophosphoric acid shows excellent NOx conversion in a diesel system while also having excellent resistance to poisoning by sulphur. And, our new lean-NOx catalyst begins to convert more NOx at a lower temperature than, e.g., a current lean-NOx platinum on alumina catalyst. This feature of the present catalyst is advantageous and important because it allows efficient conversion of NOx sooner after start up of the engine to reduce the potential that these materials will be released to the atmosphere during cold-start. Hence, the present invention catalyst overcomes the deficiencies of prior lean-NOx catalysts and is ideally suited for use in automotive applications to treat diesel exhaust gases.

Some properties of 12-tungstophosphoric acid are discussed in the article "Activation of Nitric Oxide by Heteropoly Compounds: Structure of Nitric Oxide Linkages in Tungstophosphoric Acid with Keggin Units", N. Chen and R.T. Yang, Journal of Catalysis 157, 76-86 (1995). This article discloses that tungstophosphoric acid can adsorb NO from a flue gas at relatively low temperatures and, upon rapid heating of the sample, a fraction of the NO is decomposed to N₂. The present invention catalyst comprises a precious metal along with tungstophosphoric acid and relies particularly on reductants, e.g., hydrocarbons, present in diesel exhaust for the catalytic reduction of the NOx.

This invention is directed to a lean-burn catalyst for reducing the NOx concentration in the exhaust gases produced by a diesel internal combustion engine. The lean-burn diesel catalyst comprises (i) about 5 to 40 weight percent 12-tungstophosphoric acid and (ii) at least about 0.25 weight percent precious metal selected from the group consisting of platinum, palladium, rhodium, and mixtures of any of them, preferably comprising at least platinum, carried on porous support comprising alumina, preferably being mostly γ-alumina. The weight percents of the materials (i) and (ii) are each individually based on the weight of the alumina support. Diesel engines operate in an air/fuel ratio generally of about 19-40, i.e., significantly oxygen-rich of stoichiometric.

This invention according to another embodiment is directed to a method for reducing the NOx concentration of exhaust gases generated by a diesel engine which comprises the steps of providing the invention catalyst disclosed above in a passage of the exhaust gas system of the engine and exposing the exhaust gases to the catalyst. In addition to reducing the NOx concentration in the diesel emissions, the lean-NOx catalyst also converts the carbon monoxide and hydrocarbons to more desirable gases like carbon dioxide and water.

Advantageously it has been found that the catalyst of the present invention is able to efficiently convert diesel exhaust gases at relatively low temperatures while being resistant to sulphur poisoning as compared to conventional lean-NOx catalysts.

The invention will now be described, by way of example, with reference to the accompanying drawings, in which:
Fig. 1 is a graph which shows the NOx conversion as a function of temperature for a platinum only catalyst (comparative catalyst) with a platinum/tungstophosphoric acid catalyst according to an embodiment of the present invention when exposed to a simulated sulphur containing exhaust gas; and
Fig. 2 is graph which shows the resistance to sulphur over time on stream (TOS) at 275°C of a platinum only catalyst (comparative), a tungsten oxide-platinum catalyst (comparative), and a present invention embodiment lean-NOx catalyst of tungstophosphoric acid/platinum.

This invention is directed to a lean-burn NOx catalyst for the purification of exhaust gases containing nitrogen oxides (NOx), carbon monoxide (CO), and hydrocarbons (HC) generated by a diesel engine. The NOx catalyst comprises an alumina support and deposited thereon materials consisting essentially of: (i) 5 to 40 weight percent tungstophosphoric acid and (ii) at least about 0.25 weight percent precious metal selected from the group consisting of platinum, rhodium, palladium, and a mixture of any of them, each amount of materials (i) and (ii) being individually based on the weight of the alumina support.

Preferably the tungstophosphoric acid is loaded on the support in an amount of 10 to 25 weight percent, more preferably being about 20 weight percent. The precious metal catalyst is preferably loaded on the support in an amount of 0.5 to 5 weight percent, most preferably being up to about 3 weight percent, most optimally being about 1 to 2 weight percent. While it is most preferably to use only platinum as the precious metal catalyst, a mixture of any of platinum, rhodium, and palladium may be used. When a mixture of platinum and rhodium is used, which is the preferred mixture, the weight ratio of platinum:rhodium is up to about 50:1. It is most desirable to use only platinum because of the cost of the other precious metals or their susceptability to catalyst poisons such as sulphur. However, including rhodium is desirable because the efficiency in conversion of the nitrogen oxides is increased.

In manufacturing the lean-NOx catalyst, either the tungstophosphoric acid or the precious metal catalyst may be loaded (layered) onto the other, or they may be loaded in admixture. Preferably the latter is generally done as it has been found to give the best results for sustained NOx conversion activity.

The porous support (washcoat) material loaded with the materials is a high surface area washcoat material of alumina, preferably being gamma-alumina. Preferably, the alumina is mostly γ-alumina support material (herein termed "γ-alumina support material"). By "mostly γ-alumina is meant that the support material comprises more than about 50% by weight, most preferably greater than 80%, and most preferably substantially all γ-alumina. The alumina support material, however, may comprise other materials like cerium oxide, zirconium oxide, lanthanum oxide, titanium oxide, silica, and alumina like alpha-alumina. It may be included in the support or provided as a layer thereon. This support material comprising mostly γ-alumina is preferred because it has high surface area, good adhesion and low chemical interaction with the catalyst materials. The choice of the particular alumina composition is not critical to this invention. Desirably, the alumina support material has a surface area between about 5 and 300 m²/g.

For useful application as a lean-burn catalyst in the diesel exhaust gas treatment system, the washcoat will be carried on a substrate of a high temperature stable, electrically insulating material. Typical of such substrate materials are cordierite, mullite, etc. The substrate may be in any suitable configuration, often being employed as a monolithic honeycomb structure, spun fibres, corrugated foils or layered materials. The preferred mechanical carrier is comprised of a monolithic magnesium aluminium silicate structure (i.e. cordierite), although the configuration is not critical to the catalyst of this invention. It is preferred that the surface area of the monolithic structure provide 50-1000 meter square per litre structure, as measured by N₂ adsorption. Cell density should be maximised consistent with pressure drop limitations and is preferably in the range of 200-800 cells per square inch of cross-sectional area of the structure. Still other materials and configurations useful in this invention and suitable in an exhaust gas system will be apparent to those skilled in the art in view of the present disclosure.

The tungstophosphoric acid and precious metal materials may be applied to the substrate as a mixture of washcoat and these materials or in sequential steps, the washcoat being applied first, in a manner which would be readily apparent to those skilled in the art of catalyst manufacture. Preferably, the washcoat is first applied to the substrate followed by drying and calcination of the washcoat. Commercially available alumina washcoated substrates are readily available as would be appreciated by those skilled in the art. Optimally, the washcoat is provided on the substrate in an amount of between about 25% and 35% by weight based on the weight of the substrate (e.g., monolith). Then the two materials, tungstophosphoric acid and precious metal can be deposited on the washcoat, as by impregnation techniques well known to those skilled in the art. According to such techniques, the 12-tungstophosphoric acid and a soluble salt of precious metal materials, individually or together, would be dissolved in an aqueous or organic solvent to form a solution which is then impregnated into the washcoat. If impregnated into the support individually, the order is not critical. Preferably, however, the materials are dissolved together in a solvent to form a common solution which is then impregnated into the porous support in a single step. And we have found that when the materials (e.g., platinum and tungstophosphoric acid) are provided on the support in two separate coatings, the final catalyst has better NOx conversion efficiency when the sample is not calcined between application of the two material coatings.

Tungstophosphoric acid employed in the present invention, more specifically chemically referred to as 12-tungstophosphoric acid, is commercially available as, for example, from Acros Organics, New Jersey, USA. It is available in solid form which is readily soluble in water and organic solvents like isobutanol. The particular precious metal precursor compound employed to provide the precious metal on the support is not critical to this invention. Exemplary of useful solvents are water, solution of alkalis like sodium hydroxide, ethanol, toluene, isopropyl alcohol, acetone, methylethylketone, butylacetate, and dimethylformamide. Exemplary platinum containing compounds include chloroplatinic acid, amino-platinum-nitrates and platinum-carboxylates. Any platinum compound which is soluble in an aqueous or organic medium and whose functional group is capable of being decomposed by heat to leave the precious metal on the support material may be employed in this impregnation technique. This decomposition of the functional group generally takes place when the lean-NOx catalyst is subjected to the elevated temperatures of the exhaust gas treatment system. For rhodium, soluble precursors include rhodium nitrate and rhodium chloride. Other precious metal precursor compounds useful in this invention in addition to those listed above will be apparent to those skilled in the art in view of this disclosure. In the case of platinum, in air at elevated temperatures it is oxidised to platinum oxide which at still higher temperatures decomposes to platinum and oxygen. Thus it often exists on the support as a mixture of platinum and its oxides.

Although not necessary to the operation of the lean-NOx catalyst emission control system broadly disclosed herein, most preferably, the system will be combined with a trap for diesel particulate emissions. Many such particulate traps are disclosed in the literature.

Advantageously, it has been found that by using the present invention catalyst in the lean-NOx catalyst disclosed herein, the NOx conversion of the catalyst is maintained even in the presence of sulphur in the exhaust gas. While not wishing to be bound by theory, it is believed believe that the excellent resistance to sulphur poisoning and excellent NOx conversion are due to the fact that NO is bound on the active acidic sites of the tungstophosphoric acid. While these sites have a strong propensity to adsorb NO, they have no affinity for the detrimental SO₂ poison. Subsequently, adsorbed NO on the acidic sites is catalytically reduced by hydrocarbons over platinum to harmless nitrogen. Neither the accuracy nor the understanding of this theory is necessary however for practice of the present invention. In addition, as disclosed from the following examples, the present invention catalyst operates efficiently to reduce the NOx concentration at lower temperatures than conventional lean-NOx catalysts.

### EXAMPLE 1

A diesel lean-NOx catalyst according to an embodiment of the present invention containing tungstophosphoric acid/platinum is prepared as follows. A cordierite monolith (400 cpsi) weighing 581.5 g and having a 33 wt% loading of alumina washcoat is obtained from Johnson Matthey. The alumina is gamma-alumina and provided on the cordierite from an aqueous slurry of the alumina which is dried and calcined. The alumina coated monolith is first impregnated with an aqueous solution containing dissolved 12-tungstophosphoric acid (PW₁₂). The solution is prepared by dissolving 48.0 g of 12-tungstophosphoric acid obtained from Acros Organics in 440 ml of deionised water. The alumina coated monolith is dipped in the solution until saturation. Excess liquid in the channels is removed using a blower. The monolith is then dried in a furnace at 45°C. Subsequently, dipping and drying are repeated until all of the acid solution is sorbed. For the second coating, 85.1 ml of an aqueous solution of hydrochloroplatinic acid (0.046 g Pt/ml) is used. Dipping and drying is as mentioned above, except that the final drying step is at 100°C. The resulting lean-NOx monolith contains 2 wt.% Pt and 20 wt.% tungstophosphoric acid, where the percentages are with respect to the alumina washcoat.

Equivalently, the amounts of tungstophosphoric acid and hydrochloroplatinic acid can be dissolved in a common solution and applied to the catalyst in a single, co-impregnation coating.

### TEST PROCEDURES

For evaluation of emission conversion efficiency, the catalysts of the examples are placed in a quartz flow reactor and characterised under lean-burn conditions. Gases are blended to form a simulated diesel lean-burn exhaust gas. The space velocity and the simulated exhaust gas composition are listed below. The gases flow through the reactor and the post-catalyst gases later flow to an analytical train to determine the extent of reaction on various components of the gas, especially the NOx.

### FEED GAS COMPOSITION:

- Space velocity =: 25,000 hr ⁻¹
- C₃H₈ =: 500 ppm
- C₃H₆ =: 1000 ppm
- CO =: 1000 ppm
- H₂ =: 333 ppm
- NO =: 500 ppm
- O₂ =: 86,000 ppm
- SO₂ =: 15 ppm
- CO₂ =: 9%
- H₂O =: 7.5%
- N₂ =: balance

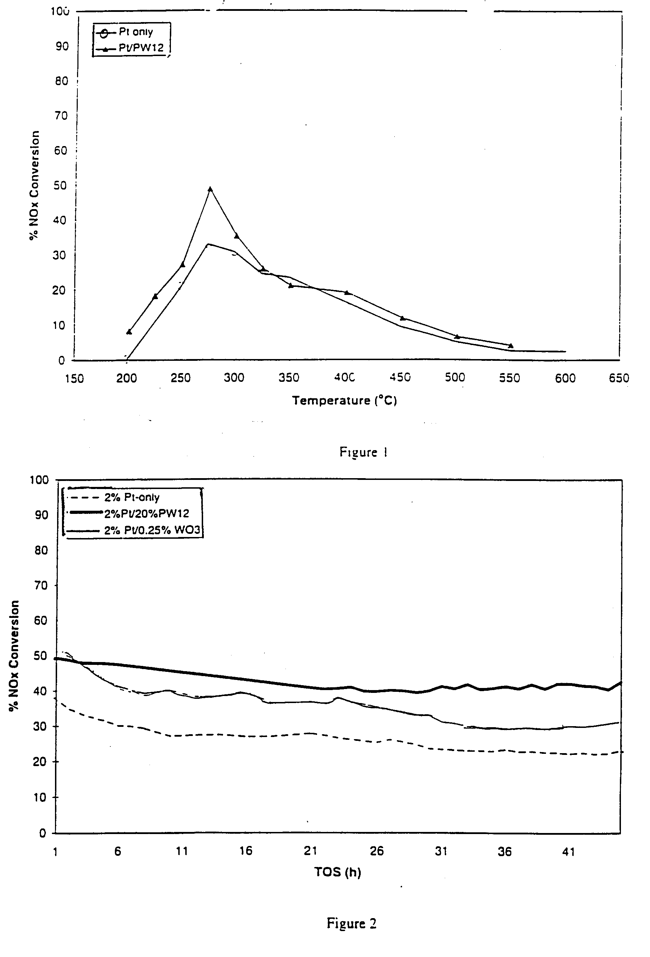

The results are shown in Figure 1. The maximum conversion of NOx on Pt/Al₂O₃ (control sample) is 34% while on the 12-tungstophosphoric acid-modified composition, it is 53%. (By control samples is meant herein an example for comparative purposes, not according to an embodiment of the present invention.) It can be seen from the graph that including 12-tungstophosphoric acid with the platinum improves the NOx conversion efficiently. Particularly, the graph shows that a present embodiment provides significantly improved NOx conversion at the lower temperatures of 200-300°C as are experienced during start-up of a diesel engine. As is known to those skilled in the art, diesel engines are also lean-burn in that the air/fuel ratio is generally 19-40. Hence the present invention tungstophosphoric acid/precious metal catalysts also provide advantages for such diesel applications to reduce cold-start emissions.

### EXAMPLE 2 (comparative Pt-only catalyst)

A 2% Pt/Al₂O₃-washcoated monolith catalyst is prepared using the method described in Example 1. This control sample is evaluated for 24 h with TOS using the identical feed gas mixture also described in Example 1. As can be seen in Figure 2, 38% initial NOx conversion is obtained using the Pt-only catalyst whereas 49% initial NOx conversion is achieved with the 2% Pt/20% PW₁₂ (Example 1) catalyst. Figure 2 illustrates that after 40 h on stream, the catalyst with 20% PW₁₂ has superior SO₂ resistance when compared to a 2% Pt only catalyst.

### EXAMPLE 3 (comparative Pt/W catalyst)

Ammonium metatungstate is employed to deposit by incipient wetness 0.25% WO₃ by weight on 10 g of 40-60 mesh gamma-alumina. The sample was allowed to stay at room temperature overnight, dried at 110°C for one hour, and then calcined at 400°C for three hours. Tetramine (II) platinum nitrate, 5 g, is dissolved in 100 ml water and an 8 ml portion of the solution is placed in a separate beaker. The solution is diluted to 14 ml and is used to impregnate the above described tungsten-impregnated alumina. The sample is allowed to stay at room temperature overnight, dried at 110°C for one hour, and then calcined at 500°C for five hours. As can be seen in Figure 2, 52% initial NOx conversion is obtained using the Pt/W catalyst whereas 49% initial NOx conversion is achieved with the 2% Pt/20% PW₁₂ (Example 1) catalyst. However, Figure 2 illustrates that after 40 h on stream, the catalyst with 20% PW₁₂ has superior SO₂ resistance when compared to a 2% Pt/W catalyst.

### EXAMPLE 4

The 2% Pt/PW₁₂ catalysts with PW₁₂ loadings of 10%, 20%, 30%, and 40% are prepared as described in Example 1. Samples of these catalysts are evaluated using the reaction conditions of the test procedure of Example 1. These conditions correspond to a space velocity of 25,000 hr⁻¹. A temperature profile (150°C - 550°C) is conducted to obtain the NOx conversion data for the catalysts as a function of temperature. At each temperature, steady state is achieved before the reported NOx conversions are obtained. The catalysts with 10%, 20%, 30%, and 40% PW₁₂ obtains NOx conversions of and 39%, 53%, 49%, and 50%, respectively, at 275°C. This data suggests that the preferred PW₁₂ loading is around 20%.

### EXAMPLE 5

A 2% Pt/40% PW₁₂ catalyst is prepared as described in Example 1. The catalyst is evaluated using the feed gas and procedure described in Example 4. After 40 hours of time on stream (TOS) a 50% NOx conversion is maintained.

### EXAMPLE 6

A 20% PW₁₂ catalyst is prepared according to Example 1 without the addition of Pt, Pd, or Rh. The catalyst is evaluated using the procedure and feed gas described in Example 4. Minimal NOx conversion (less than 5%) is observed over the temperature range of 150° C - 550° C. This suggests that the presence of noble metal in combination with the tungstophoric acid is critically necessary to achieve the objectives of this invention.

### EXAMPLE 7

A 2% Pt/20% PW₁₂ catalyst is prepared as described in Example 1. This catalyst is evaluated using the feed gas described in Example 4. A temperature profile is conducted from 150° C - 700° C which is then followed by another temperature profile from 700° C - 150° C. At 275° C, the initial temperature profile results in 53% NOx conversion, while the second temperature profile obtains a 58% NOx conversion. This illustrates that the catalyst has thermal stability to 700° C under these experimental conditions.

### EXAMPLE 8

A Pt/PW₁₂ catalyst is prepared using sequential impregnation. The cordierite monolith is first impregnated with 2 wt-% Pt using the method described in Example 1. After all the Pt solution is sorbed, the monolith is calcined at 500° C for 4 h. Then, PW₁₂ is applied as described in Example 1 resulting in a 20 wt-% loading. The NOx conversion for the sequentially impregnated Pt/PW₁₂ catalyst is lower over the entire temperature profile range of 150°C - 550°C. This suggests that sequential impregnation results in lower overall NOx conversion.

After 40 hours on stream using the feed gas described in Example 4, a NOx conversion of 35% is obtained with this sequentially impregnated catalyst.

### EXAMPLE 9

A 2% Pt/20% PW₁₂ catalyst is prepared according to the method described in Example 1, but after the final drying step the catalyst is calcined at 400° C for 4 hours. A temperature profile is conducted using the procedure and feed gas described in Example 5. This catalyst results in identical NOx conversion when compared to the 2% Pt/20% PW₁₂ catalyst prepared without the final calcination step.

### EXAMPLE 10

A 0.25% Rh/1.8% Pt/20% PW₁₂ catalyst is prepared according to the procedure described in Example 1 using a rhodium solution of desired concentration. This catalyst is evaluated using the identical feed gas and test procedure described in Example 1. A 39% NOx conversion is obtained after 40 h of TOS at 325° C.

### EXAMPLE 11

A 0.30% Pd/1.5% Pt/25% PW₁₂ catalyst is prepared using the method described in Example 1. A palladium nitrate solution of appropriate concentration is used to form the desired catalyst. This catalyst is evaluated for 40 hours with TOS at 350° C using the simulated feed gas mixture described in Example 1. The NOx conversion is 34%.

### EXAMPLE 12

A 1% Pt/20% PW₁₂ catalyst is prepared according to the procedure described in Example 1 using a platinum solution of desired concentration. This catalyst is evaluated using the identical feed gas and test procedure described in Example 1. A 36% NOx conversion is obtained after 40 hours of TOS at 325° C.

## Claims

1. A lean-NOx catalyst useful for reducing the concentration of NOx in diesel engine exhaust gases, said catalyst comprising:
a porous support comprising alumina; and materials, loaded on said support, consisting essentially of:
(i) 5 to 40 weight percent 12-tungstophosphoric acid, and
(ii) at least about 0.25 weight percent precious metal selected from the group consisting of platinum, palladium, rhodium, and mixtures thereof, each amount of materials (i) and (ii) being individually based on the weight of said support.

2. A lean-NOx diesel catalyst according to claim 1, wherein said tungstophosphoric acid is loaded on said support in an amount of 10 to 25 weight percent.

3. A lean-NOx diesel catalyst according to claim 2, wherein said tungstophosphoric acid is loaded on said support in an amount of about 20 weight percent.

4. A lean-NOx diesel catalyst according to claim 1, wherein the precious metal is loaded on said support in an amount of 0.5 to 5 weight percent.

5. A lean-NOx diesel catalyst according to claim 1, wherein said the precious metal comprises platinum and rhodium in a weight ratio of platinum:rhodium up to about 50:1.

6. A lean-NOx diesel catalyst according to claim 1, wherein said precious metal consists of platinum.

7. A lean-NOx diesel catalyst according to claim 1, wherein said tungstophosphoric acid and said precious metal are loaded in layers, one on top of the other.

8. A lean-NOx diesel catalyst according to claim 1, wherein said tungstophosphoric acid and said precious metal are loaded as a mixture thereof onto said support.

9. A lean-NOx diesel catalyst according to claim 1, wherein said tungstophosphoric acid and said precious metal are loaded on said support from solutions of the individual materials or their mixture.

10. A process for reducing the concentration of NOx in the oxygen-rich exhaust gas emissions of a diesel internal combustion engine, whose oxygen content is greater than that required for oxidising all the components to be oxidised therein,, said process comprising the steps of:
providing a lean-NOx catalyst into a passage in the exhaust gas system of said diesel engine, said catalyst comprising: a porous support comprising alumina; and materials, loaded on said support, consisting essentially of: (i) about 5 to 40 weight percent tungstophosphoric acid, and (ii) at least about 0.25 weight percent precious metal selected from the group consisting of platinum, palladium, rhodium, and mixtures thereof, each amount of materials (i) and (ii) being individually based on the weight of said support,; and
bringing said oxygen-rich exhaust gases into contact with said lean-NOx catalyst.
